# EUROPEAN PATENT APPLICATION

(11) **EP 4 791 067 A1**
(43) Date of publication of application: **12.08.2026**
(21) Application number: 24881244.8
(22) Date of filing: 27.08.2024
(51) Int. Cl.: H04W 24/08

(54) **COMMUNICATION METHOD AND COMMUNICATION APPARATUS**

(30) Priority: 24.10.2023 CN 202311382711
(71) Applicant: HUAWEI TECHNOLOGIES CO., LTD., Shenzhen, Guangdong 518129 (CN)
(72) Inventor: ZHOU, Han, Shenzhen, Guangdong 518129 (CN); TIE, Xiaolei, Shenzhen, Guangdong 518129 (CN); XUE, Yifan, Shenzhen, Guangdong 518129 (CN); HUA, Meng, Shenzhen, Guangdong 518129 (CN)
(74) Representative: Pfenning, Meinig & Partner mbB
(86) International application number: PCT/CN2024/114880
(87) International publication number: WO 2025/086876

(57) **Abstract**

This application provides a communication method and a communication apparatus. The method includes: receiving a first signal from a network device in a low-power state; and determining a first measurement value of the first signal, where the first measurement value is average received power of the first signal in a first bandwidth in first time, and the first bandwidth is a receive bandwidth of a terminal device in the low-power state or a transmit bandwidth of the first signal. In this solution, a measurement metric applicable to a low-power receiver is defined, so that a terminal device having no frequency domain processing capability or a low frequency domain processing capability can accurately determine the measurement value.

## Description

### CROSS-REFERENCE TO RELATED APPLICATIONS

This application claims priority to Chinese Patent Application No. 202311382711.5, filed with the China National Intellectual Property Administration on October 24, 2023 and entitled "COMMUNICATION METHOD AND COMMUNICATION APPARATUS", which is incorporated herein by reference in its entirety.

### TECHNICAL FIELD

This application relates to the field of wireless communication technologies, and in particular, to a communication method and a communication apparatus.

### BACKGROUND

An existing new radio (new radio, NR) system defines metrics used for signal measurement of a serving cell, among which most commonly used metrics include a synchronization signal reference signal received power (synchronization signal reference signal received power, SS-RSRP). In NR, the SS-RSRP is defined as average power on all resource elements (resource elements, REs) carrying a secondary synchronization signal (secondary synchronization signal, SSS), that is, a sum of power on all the REs occupied by the SSS is divided by a quantity of REs occupied by the SSS.

However, an existing definition of the SS-RSRP in NR is not suitable for a terminal device in a low-power state, in other words, not suitable for a low-power receiver of the terminal device. This is because the existing SS-RSRP is defined as the average power on all the REs carrying the SSS, which includes a concept of frequency domain REs. According to the definition, when measuring and calculating the SS-RSRP, the terminal device needs to perform Fourier transform on a received signal into frequency domain for processing. However, to implement low power consumption, the low-power receiver of the terminal device usually does not include a fast Fourier transform (fast Fourier transform, FFT) module, and cannot perform signal processing at an RE granularity in frequency domain.

How to determine a measurement value, for example, RSRP, of the terminal device in the low-power state needs to be resolved.

### SUMMARY

Embodiments of this application provide a communication method and a communication apparatus, to determine a measurement value of a terminal device in a low-power state.

According to a first aspect, an embodiment of this application provides a communication method. The method may be performed by a terminal device or a module (for example, a chip) in the terminal device. The method includes: receiving a first signal from a network device in a low-power state; and determining a first measurement value of the first signal, where the first measurement value is average received power of the first signal in a first bandwidth in first time, and the first bandwidth is a receive bandwidth of the terminal device in the low-power state or a transmit bandwidth of the first signal.

In the foregoing solution, a measurement metric applicable to a low-power receiver is defined, so that a terminal device having no frequency domain processing capability or a low frequency domain processing capability can accurately determine the measurement value.

In a possible implementation method, the first signal is sent using orthogonal frequency division multiplexing (orthogonal frequency division multiplexing, OFDM) modulation, and the first time is an OFDM symbol occupied by the first signal.

In a possible implementation method, the first signal is sent using on-off keying (on-off keying, OOK) modulation, each OOK modulation symbol occupies one OFDM symbol, and the first time is an OOK ON modulation symbol occupied by the first signal or an OFDM symbol occupied by the first signal. In a possible implementation method, the first signal is sent using OOK modulation, each OOK modulation symbol occupies a segment on one OFDM symbol, and the first time is an OFDM symbol occupied by the first signal, an OOK ON segment occupied by the first signal, or an OOK segment occupied by the first signal.

In a possible implementation method, the first signal is sent using frequency-shift keying (frequency shift keying, FSK) modulation, and the first time is an OFDM symbol occupied by the first signal or a frequency branch on the OFDM symbol occupied by the first signal.

In a possible implementation method, the method further includes: determining a second measurement value based on the first measurement value, the receive bandwidth of the terminal device in the low-power state, the transmit bandwidth of the first signal, and noise interference power, where the noise interference power is average received power of noise and/or interference, obtained through measurement in the receive bandwidth of the terminal device in the low-power state, in second time occupied by the noise and/or the interference, and the second time is not used for sending the first signal.

In a possible implementation method, ${RSRP}_{2} = {RSRP}_{1} - {P}_{Noise} ∗ \frac{{B}_{2} - {B}_{1}}{{B}_{2}}$, where *RSRP*₂ is the second measurement value, *RSRP*₁ is the first measurement value, *B*₂ is the receive bandwidth of the terminal device in the low-power state, *B*₁ is the transmit bandwidth of the first signal, and *P_{Noise}* is the noise interference power.

In a possible implementation method, the method further includes: determining a third measurement value based on the first measurement value, the receive bandwidth of the terminal device in the low-power state, and the transmit bandwidth of the first signal.

In a possible implementation method, ${RSRP}_{3} = {RSRP}_{1} ∗ \frac{{B}_{1}}{{B}_{2}}$, where *RSRP*₃ is the third measurement value, *RSRP*₁ is the first measurement value, *B*₂ is the receive bandwidth of the terminal device in the low-power state, and *B*₁ is the transmit bandwidth of the first signal.

In a possible implementation method, that the terminal device determines the first measurement value of the first signal includes: determining the first measurement value of the first signal when a frequency domain processing capability of a low-power receiver of the terminal device is less than a first threshold.

In a possible implementation method, the method further includes: sending capability information, where the capability information includes at least one of first information, second information, or the receive bandwidth of the terminal device in the low-power state, the first information indicates the frequency domain processing capability of the low-power receiver of the terminal device, and the second information indicates an estimation capability of the low-power receiver for the noise and/or the interference; receiving a measurement threshold, where the measurement threshold is determined based on the capability information; and determining, based on the measurement threshold, whether to execute a radio link operation.

According to a second aspect, an embodiment of this application provides a communication apparatus. The apparatus may be a terminal device or a module (for example, a chip) in the terminal device. The apparatus has a function of implementing any implementation method of the first aspect. The function may be implemented by hardware, or may be implemented by hardware executing corresponding software. The hardware or the software includes one or more modules corresponding to the function.

According to a third aspect, an embodiment of this application provides a communication apparatus, including units or means (means) for performing steps of any implementation method of the first aspect.

According to a fourth aspect, an embodiment of this application provides a communication apparatus, including a processor and an interface circuit. The processor is configured to communicate with another apparatus via the interface circuit, and perform any implementation method of the first aspect. There are one or more processors.

Optionally, the communication apparatus may further include a storage configured to store computer instructions. The storage is coupled to the processor, and the processor executes the computer instructions stored in the storage, to cause the apparatus to perform any implementation method of the first aspect.

According to a fifth aspect, an embodiment of this application further provides a computer program product. The computer program product includes a computer program or instructions. When the computer program or the instructions are run by a communication apparatus, any implementation method of the first aspect is caused to be performed.

According to a sixth aspect, an embodiment of this application further provides a computer-readable storage medium. The computer-readable storage medium stores instructions. When the instructions are run on a communication apparatus, any implementation method of the first aspect is performed.

According to a seventh aspect, an embodiment of this application further provides a chip system, including a processor configured to perform any implementation method of the first aspect.

### BRIEF DESCRIPTION OF DRAWINGS

FIG. 1(a) is a diagram of an architecture of a communication system to which an embodiment of this application is applied;
FIG. 1(b) is a diagram of a network device;
FIG. 2 is an example diagram of discrete on-off keying;
FIG. 3(a) to FIG. 3(c) are an example diagram of envelope detection;
FIG. 4 is an example of Manchester coding;
FIG. 5 is another example of Manchester coding;
FIG. 6 is an example diagram of sending an OOK signal in an OFDM system;
FIG. 7 is another example diagram of sending an OOK signal in an OFDM system;
FIG. 8 is an example diagram of a relationship between a transmit bandwidth of a low-power synchronization signal and a receive bandwidth of a low-power receiver;
FIG. 9 is a schematic flowchart of a communication method according to an embodiment of this application;
FIG. 10 is an example diagram of sending a signal using OFDM modulation;
FIG. 11 is an example diagram of sending a signal using FSK modulation;
FIG. 12 is an example diagram of reducing impact of noise and/or interference on a measurement value;
FIG. 13 is a diagram of a structure of a communication apparatus according to an embodiment of this application; and
FIG. 14 is a diagram of a structure of a communication apparatus according to an embodiment of this application.

### DESCRIPTION OF EMBODIMENTS

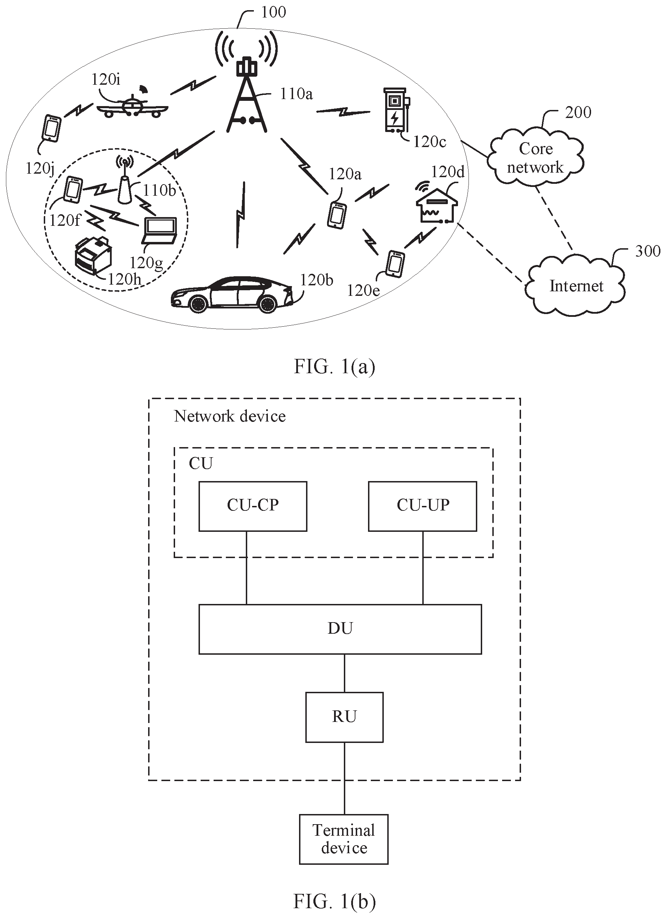

FIG. 1(a) is a diagram of an architecture of a communication system to which an embodiment of this application is applied. The communication system shown in FIG. 1(a) includes a radio access network 100 and a core network 200. Optionally, the communication system further includes an internet 300. The radio access network 100 may include at least one network device (for example, 110a and 110b in FIG. 1(a)), and may further include at least one terminal device (for example, 120a to 120j in FIG. 1(a)). The terminal device is connected to the network device in a wireless manner, and the network device is connected to the core network in a wireless or wired manner. A core network device and the network device may be different physical devices that are independent of each other, a function of the core network device and a logical function of the network device may be integrated into a same physical device, or a part of functions of the core network device and a part of functions of the network device may be integrated into one physical device. Mutual connections between terminal devices and between network devices may be implemented in a wired or wireless manner. FIG. 1(a) is merely a diagram. The communication system may further include other network devices, for example, may further include a wireless relay device and a wireless backhaul device, which are not shown in FIG. 1(a).

The network device is an access device through which the terminal device accesses the communication system in a wired or wireless manner. The network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access point in a Wi-Fi system, or the like, or may be a module or a unit that completes a part of functions of the base station, for example, may be a central unit (central unit, CU), a distributed unit (distributed unit, DU), or a radio unit (radio unit, RU). The network device may be a macro base station (for example, 110a in FIG. 1(a)), may be a micro base station or an indoor base station (for example, 110b in FIG. 1(a)), or may be a relay node, a donor node, or the like. A specific technology and a specific device form that are used by the network device are not limited in embodiments of this application.

The terminal device is a device having wireless receiving and sending functions, and may send a signal to a network device, or receive a signal from the network device. The terminal device includes but is not limited to a terminal apparatus, a terminal, user equipment (user equipment, UE), a mobile station, a mobile terminal, and the like. The terminal device may be widely used in various scenarios, such as sidelink (sidelink) communication (for example, device-to-device (device-to-device, D2D) communication or vehicle-to-everything (vehicle-to-everything, V2X) communication), machine-type communication (machine-type communication, MTC), the internet of things (internet of things, IoT), virtual reality, augmented reality, industrial control, autonomous driving, telemedicine, a smart grid, smart furniture, a smart office, a smart wearable, smart transportation, and a smart city. The terminal device may be specifically a mobile phone, a tablet computer, a computer having wireless receiving and sending functions, a wearable device, a vehicle, an airplane, a ship, a robot, a robotic arm, a smart home device, or the like. A specific technology and a specific device form that are used by the terminal device are not limited in embodiments of this application.

The network device and the terminal device may be at fixed positions, or may be movable. The network device and the terminal device may be deployed on the land, including an indoor or outdoor device, a handheld device, or a vehicle-mounted device; may be deployed on a water surface; or may be deployed on a plane, a balloon, or an artificial satellite. Application scenarios of the network device and the terminal device are not limited in embodiments of this application.

Roles of the network device and the terminal device may be relative. For example, a helicopter or an uncrewed aerial vehicle 120i in FIG. 1(a) may be configured as a mobile network device, and for a terminal device 120j accessing the radio access network 100 via 120i, the terminal device 120i is a network device. However, for a network device 110a, 120i is a terminal device. In other words, 110a and 120i communicate with each other according to a radio air interface protocol. It is clear that 110a and 120i may alternatively communicate with each other according to an interface protocol between network devices. In this case, for 110a, 120i is also a network device. Therefore, both the network device and the terminal device may be collectively referred to as communication apparatuses. 110a and 110b in FIG. 1(a) may be referred to as communication apparatuses having a function of the network device, and 120a to 120j in FIG. 1(a) may be referred to as communication apparatuses having a function of the terminal device.

Communication between the network device and the terminal device, between network devices, or between terminal devices may be performed by using a licensed spectrum, an unlicensed spectrum, or both the licensed spectrum and the unlicensed spectrum; or may be performed by using a spectrum below 6 gigahertz (gigahertz, GHz), a spectrum above 6 GHz, or both the spectrum below 6 GHz and the spectrum above 6 GHz. A spectrum resource used for wireless communication is not limited in embodiments of this application.

In embodiments of this application, the function of the network device may alternatively be performed by a module (for example, a chip) in the network device, or may be performed by a control subsystem including the function of the network device. Herein, the control subsystem including the function of the network device may be a control center in the foregoing application scenarios, such as a smart grid, industrial control, smart transportation, and a smart city. The function of the terminal device may alternatively be performed by a module (for example, a chip or a modem) in the terminal device, or may be performed by an apparatus including the function of the terminal device.

In this application, the network device sends a downlink signal or downlink information to the terminal device, where the downlink information is carried on a downlink channel; and the terminal device sends an uplink signal or uplink information to the network device, where the uplink information is carried on an uplink channel. To communicate with the network device, the terminal device needs to establish a wireless connection with a cell controlled by the network device. The cell establishing the wireless connection to the terminal device is referred to as a serving cell of the terminal device.

FIG. 1(b) is a diagram of a network device. As shown in FIG. 1(b), the network device includes one or more CUs, one or more DUs, and one or more RUs. For clarity, FIG. 1(b) shows only one CU, one DU, and one RU. The CU is configured to connect to a core network and the one or more DUs. Optionally, the CU may have a part of functions of the core network. The CU may include a CU-control plane (control plane, CP) and a CU-user plane (user plane, UP).

The CU and the DU may be configured based on functions, implemented by the CU and the DU, of protocol layers of a wireless network. For example, the CU is configured to implement functions of a packet data convergence protocol (packet data convergence protocol, PDCP) layer and a protocol layer above the PDCP layer (for example, a radio resource control (radio resource control, RRC) layer and/or a service data adaptation protocol (service data adaptation protocol, SDAP) layer), and the DU is configured to implement a function of a protocol layer below the PDCP layer (for example, a radio link control (radio link control, RLC) layer, a medium access control (medium access control, MAC) layer, and/or a physical (physical, PHY) layer). For another example, the CU is configured to implement a function of a protocol layer above the PDCP layer (for example, an RRC layer and/or a SDAP layer), and the DU is configured to implement functions of the PDCP layer and a protocol layer below the PDCP layer (for example, an RLC layer, a MAC layer, and/or a PHY layer).

The foregoing configuration of the CU and the DU is merely an example. Alternatively, functions of the CU and the DU may be configured based on a requirement. For example, the CU or the DU may be configured to have functions of more protocol layers; or the CU or the DU may be configured to have a part of processing functions of the protocol layer. For example, a part of functions of the RLC layer and a function of a protocol layer above the RLC layer are set on the CU, and a remaining function of the RLC layer and a function of a protocol layer below the RLC layer are set on the DU. For another example, functions of the CU or the DU may be divided based on a service type or another system requirement, for example, based on latency. A function whose processing time needs to satisfy a low latency requirement is set on the DU, and a function whose processing time does not need to satisfy the latency requirement is set on the CU.

The DU and the RU may cooperate to jointly implement a function of the PHY layer. One DU may be connected to one or more RUs. Functions of the DU and the RU may be configured into a plurality of manners based on a design. For example, the DU is configured to implement a baseband function, and the RU is configured to implement an intermediate radio frequency function. For another example, the DU is configured to implement a higher layer function of the PHY layer, and the RU is configured to implement a lower layer function of the PHY layer or implement the lower layer function and a radio frequency function. The higher layer function of the physical layer may include a part of functions of the physical layer, and the part of functions are closer to the MAC layer. The lower layer function of the physical layer may include the other part of functions of the physical layer, and the other part of functions are closer to an intermediate radio frequency side.

The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna processing unit (active antenna unit, AAU), or a remote radio head (remote radio head, RRH). In different systems, the CU, the DU, or the RU may also have different names. However, a person skilled in the art may understand meanings thereof. For example, in an ORAN system, the CU may also be referred to as an O-CU (open CU), the DU may also be referred to as an O-DU, and the RU may also be referred to as an O-RU. Any one of the CU (or the CU-CP or the CU-UP), the DU, and the RU in this application may be implemented by using a software module, a hardware module, or a combination of a software module and a hardware module.

For ease of understanding of content of this application, the following first provides explanations and descriptions of nouns or terms in embodiments of this application.

### 1. Power saving technology

Compared with a long term evolution (long term evolution, LTE) system, 5G new radio (new radio, NR) supports a larger transmission bandwidth, more transceiver antenna arrays, a higher transmission rate, and a scheduling mechanism that is more flexible and that has a smaller granularity. The foregoing features of the 5G NR provide a broader application range, but greatly increase power consumption burden of a terminal device.

To reduce power consumption of the terminal device, the 3rd generation partnership project (3rd generation partnership project, 3GPP) introduces a power saving (power saving) research topic in NR Rel-16/17, and an objective of the power saving research topic is to study a possible power reduction solution for the terminal device in various states (including a connected (connected) state, an idle (idle) state, and an inactive (inactive) state).

The idle state is a state in which the terminal device completes camping in a cell but does not perform a random access process. The terminal device usually enters the idle state after being powered on or after performing radio resource control (radio resource control, RRC) release.

The idle state corresponds to a connected state. The connected state is a state in which the terminal device does not perform the RRC release after completing the random access process. The terminal device may perform data transmission with a network device in the connected state. When the terminal device is in the idle state, a state of the terminal device transitions to the connected state after the random access process is completed. When the terminal device is in the connected state, a state of the terminal device transitions to the idle state after the RRC release is completed.

The inactive state is a state between the connected state and the idle state. For a terminal device in the inactive state, a user plane bearer of an air interface is suspended (suspended), and a user plane bearer and a control plane bearer between a RAN and a core network (core network, CN) are still maintained. When the terminal device initiates a call or service request, the user plane bearer of the air interface needs to be activated, and the existing user plane bearer and the existing control plane bearer between the RAN and the CN are reused.

The following power saving methods have been defined before a 3GPP NR system.

### Method 1: Extended discontinuous reception (extended discontinuous reception, eDRX) mechanism

In the LTE system and the NR system, a maximum DRX cycle is 2.56 seconds (s). Some terminal devices, such as internet of things terminals (for example, a water meter, an electricity meter, and a gas meter), have high requirements for power saving. Therefore, the eDRX mechanism is introduced to extend a cycle in which the terminal device monitors paging, to save power. A monitoring cycle of up to 2 hours can be introduced in the eDRX mechanism.

### Method 2: Power saving mode (power saving mode, PSM)/Initial connection only (mobile initiated connection only, MICO) mode

Some terminal devices, such as sensors, may perform only uplink-triggered services. The terminal devices periodically report data collected by the terminal devices and have no downlink-triggered services, or are insensitive to latency of the downlink-triggered services. Therefore, the PSM/MICO is introduced. In the PSM/MICO, the terminal device usually does not need to monitor downlink paging, and monitors paging only within a short period of time after an uplink service is completed, to further reduce power consumption of the terminal device.

### 2. Wake-up radio (wake-up radio, WUR)

The wake-up radio means that when a main receiver (a main receiver or a main radio) is in an ultra-deep sleep (ultra-deep sleep) mode or is completely powered off, a wireless communication station turns on only one low-power receiver to monitor a low-power wake-up signal (low-power wake-up signal, LP-WUS).

The main receiver is also referred to as a main communication module, a main circuit, or the like. The main receiver is a conventional receiver of a terminal device in NR, and is configured to receive downlink signaling, a downlink signal, downlink data, and the like in NR. The main receiver includes an intermediate radio frequency module and a baseband processing module.

The low-power receiver is also referred to as a wake-up receiver (wake-up receiver), a low-power wake-up radio (low-power WUR, LP-WUR) receiver, a wake-up circuit, a communication auxiliary module, a secondary circuit, or the like. The low-power receiver includes a simple receiver including the intermediate radio frequency module, or the low-power receiver includes a module with lower power consumption. This causes operating power consumption of the low-power receiver to be far lower than that of the main receiver. For example, power consumption of the low-power receiver in an operating state is only less than one tenth of average power consumption of the main receiver in an idle state.

The low-power receiver may be, for example, some radio frequency circuits and baseband circuits with lower power consumption. For example, the low-power receiver may not include a ring oscillator (ring oscillator) of a phase-locked loop (phase-locked loop, PLL), and uses a low noise amplifier (low noise amplifier, LNA) with a high noise factor. Alternatively, the low-power receiver may be a submodule (that is, a part of modules) of the main receiver, or reuse a part of circuits, components, or the like with the main receiver. Alternatively, compared with the main receiver, the low-power receiver includes fewer components when operating. For example, the low-power receiver does not include a fast Fourier transform module, a complex channel decoding module, a low-density parity-check code (low density parity check code, LDPC) decoding module, a polar decoding module, or the like, and may have fewer registers and memory units and use a bus with a lower bandwidth. Therefore, power consumption of the low-power receiver is lower than power consumption of the main receiver. Alternatively, the main receiver may be a low-power receiver in a low-power operating mode. For example, the main receiver is a low-power receiver when an operating voltage is reduced, a clock frequency is slowed down, or a sampling rate and a bit width of analog-to-digital sampling are reduced.

Operating modes of the main receiver and the low-power receiver are as follows.

After completing data receiving and sending, the main receiver returns to the idle state. The main receiver may enter the ultra-deep sleep mode or even be completely powered off to reduce power consumption. In this case, the low-power receiver is in a power-on state and receives the LP-WUS.

Once the low-power receiver receives the LP-WUS sent to the low-power receiver or a group to which the low-power receiver belongs, the low-power receiver triggers the main receiver to wake up or power on, and the main receiver continues to receive and send data or signaling.

In this application, the LP-WUS may be a general term, and the LP-WUS includes the following two aspects.
(1) Low-power synchronization signal (low-power synchronization signal, LP-SS): The low-power synchronization signal is also referred to as a synchronization sequence or the like. The low-power synchronization signal may be periodically sent, mainly to provide a time synchronization function for the low-power receiver, so that the low-power receiver determines a frame, a subframe, a slot, a symbol, or the like in which current time is located, determines whether the terminal device is in a cell coverage area, and determines whether a local clock is offset.
(2) Wake-up signal: The wake-up signal is used for waking up a specific terminal device or a group of terminal devices, and triggering the terminal device to perform some operations, including but not limited to updating a system message, receiving a paging message, initiating random access, receiving disaster warning information, and the like.

In another implementation method, the LP-WUS may also include the wake-up signal, but does not include the synchronization signal. The low-power synchronization signal may be broadcast and sent by a network device by using a piece of additional signaling. For ease of description, in this application, the LP-WUS is specifically a wake-up signal, and a synchronization signal received by the low-power receiver is represented by the LP-SS.

### 3. On-off keying (on-off keying, OOK) and envelope detection (envelope detection, ED)

The on-off keying is a simplest form of amplitude-shift keying (amplitude-shift keying, ASK) modulation, which represents information by existence or absence of a signal. For example, when the signal exists in signal sampling time, (ON) represents a bit value 1, and when no signal exists in the signal sampling time, (OFF) represents a bit value 0. The signal sent in the sampling time is also referred to as an OOK symbol.

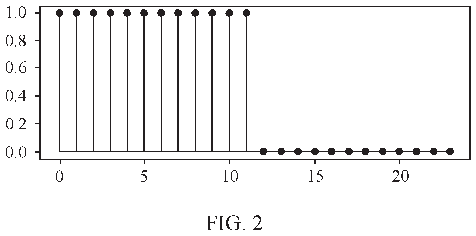

FIG. 2 is an example diagram of discrete on-off keying. A total of 24 sample points are sent, and every 12 sample points represent one coded bit. A signal is sent in first 12 sample points, which represents ON, and therefore, code is 1. No signal is sent in last 12 sample points, which represents OFF, and therefore, code is 0.

Based on the foregoing features of simple modulation of the OOK symbol, a receiver can obtain the signal only through energy detection. For example, in the first 12 sample points, once energy of the received signal detected by a terminal device exceeds a specific threshold, it may be considered that a network device sends the code 1. In the last 12 sample points, once the energy of the received signal detected by the terminal device does not exceed the specific threshold, it may be considered that the network device does not send the signal, which is represented as the code 0.

Based on the foregoing features of simple modulation of OOK, the OOK symbol can be demodulated and received by using a simple device. Therefore, the OOK is suitable as a modulation scheme for an LP-WUS. For receiving of the OOK symbol, an envelope detection method is generally used, and a main manner of the envelope detection is to perform detection on an amplitude of a signal.

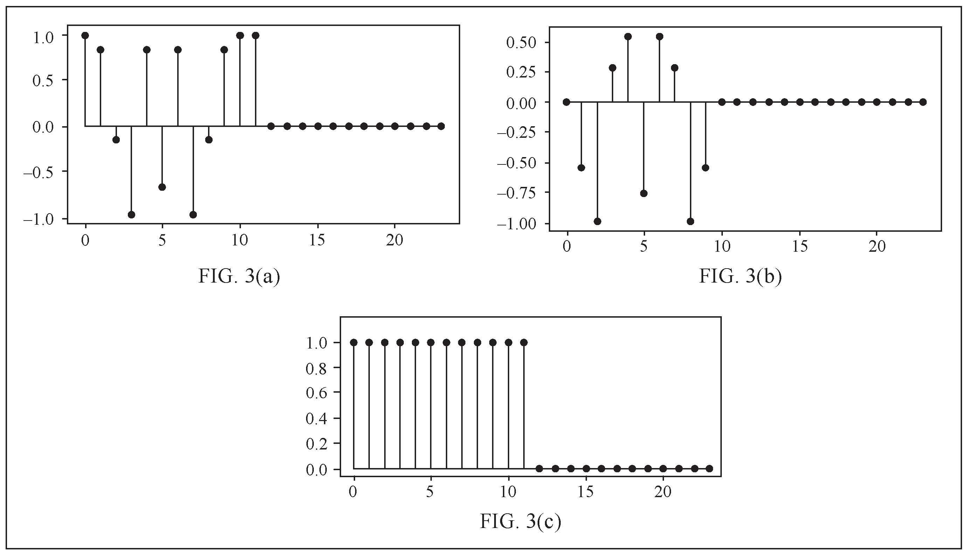

FIG. 3(a) to FIG. 3(c) are an example diagram of envelope detection. FIG. 3(a) represents a real (real) part of a signal, FIG. 3(b) represents an imaginary (imag) part of the signal, and FIG. 3(c) represents a signal amplitude (amplitude) obtained based on the real part and the imaginary part. $amplitude = \sqrt{{real}^{2} + {imag}^{2}}$.

In addition to the OOK, a low-power receiver can also use a frequency-shift keying (frequency-shift keying, FSK) system or an orthogonal frequency division multiplexing (orthogonal frequency division multiplexing, OFDM) system to send a wake-up signal (LP-WUS) and a low-power synchronization signal (LP-SS).

### 4. Manchester coding

The Manchester coding uses two or more consecutive different levels (envelopes) to represent one bit. Table 1 is 1/2 Manchester coding, in which one information bit is coded into two symbols.

**Table 1**

| Information | Code |
|---|---|
| 1 | 01 (OFF, ON) |
| 0 | 10 (ON, OFF) |

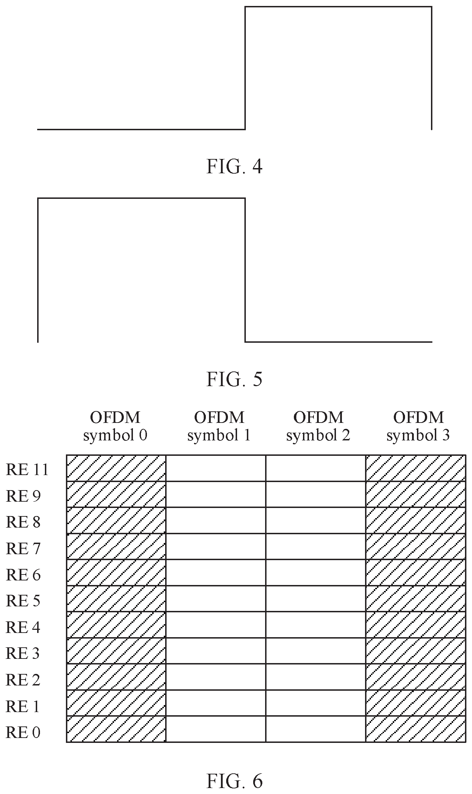

An envelope pattern (that is, a signal level) corresponding to the code 01 shown in Table 1 is shown in FIG. 4, and an envelope pattern (that is, a signal level) corresponding to the code 10 shown in Table 1 is shown in FIG. 5.

An advantage of the Manchester coding is that when receiving a signal, a terminal device may directly perform decoding by comparing two preceding and succeeding symbols in the code. For example, for the 1/2 Manchester coding, if a signal level of a first symbol is less than a signal level of a second symbol, the information bit may be determined as 1; or if a signal level of a first symbol is not less than a signal level of a second symbol, the information bit is determined as 0. In this solution, threshold determination does not need to be performed on the two symbols, that is, a signal level of each symbol does not need to be compared with a threshold.

### 5. OFDM-based OOK system

To implement sending of an OOK signal in an OFDM system, there may be two manners.

Manner 1: 1-bit OOK, to be specific, one OFDM symbol (symbol) carries one OOK ON modulation symbol or one OOK OFF modulation symbol.

FIG. 6 is an example diagram of sending an OOK signal in an OFDM system. In this example, the OOK signal occupies 12 resource elements (resource elements, REs) in frequency domain. A signal is sent on a symbol 0 and a symbol 3, which indicates OOK ON, while no signal is sent on a symbol 1 and a symbol 2, which indicates OOK OFF. When 1:2 Manchester coding is used, the symbol 0 and the symbol 1 are combined as (ON, OFF), which indicates information 0, while the symbol 2 and the symbol 3 are combined as (OFF, ON), which indicates information 1. In this way, it can be learned that when a 1:2 Manchester coding system is used, each OFDM symbol of the 1-bit OOK actually carries only 0.5-bit information.

Manner 2: M-bit OOK, to be specific, one OFDM symbol carries an M-bit OOK signal, where M is an integer greater than 1.

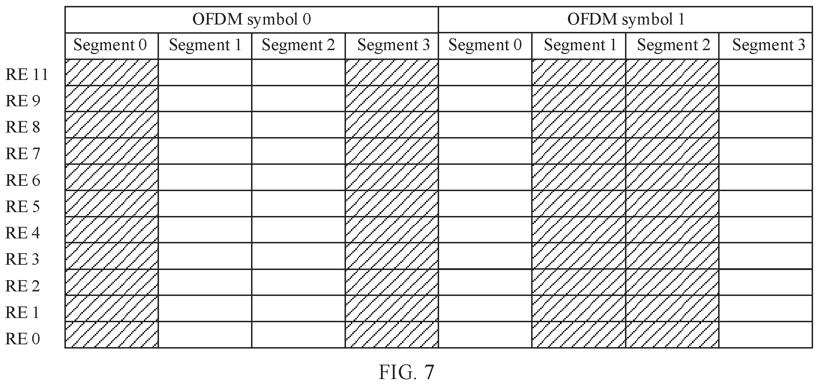

FIG. 7 is another example diagram of sending an OOK signal in an OFDM system. Sample points included on each OFDM symbol are divided into four OOK segments (segments) (where the OOK segment is also referred to as a segment below), and each segment carries one OOK ON modulation symbol or one OOK OFF modulation symbol. Herein, an example in which the sample points included on each OFDM symbol are divided into the four segments is used, and a quantity of segments obtained through division is not limited in practice. Refer to FIG. 7. When 1:2 Manchester coding is used, on each OFDM symbol, a segment 0 and a segment 1 are combined into one coded bit, and a segment 2 and a segment 3 are combined into one coded bit. Therefore, one OFDM symbol carries 2-bit information, and therefore M=2. Similarly, it may be obtained that, for a 1:2 Manchester coding 2-bit OOK system, a quantity of segments on each OFDM symbol is 2×M=4, OOK ON is sent in half of the segments, and no signal is sent on the other half of the segments, which is OOK OFF.

### 6. Mobility measurement

A terminal device in conventional NR periodically performs mobility measurement in an idle state or a connected state. The mobility measurement includes the following.

### (1) Serving cell measurement or camped cell measurement.

A serving cell is a cell accessed by the terminal device in the connected state, while a camped cell is a cell on which the terminal device camps in the idle state. The terminal device periodically performs detection on signal quality of a synchronization signal (a primary synchronization signal (primary synchronization signal, PSS), a secondary synchronization signal (secondary synchronization signal, SSS), or the like) of a current serving cell or a current camped cell. If the signal quality is excessively low, the terminal device may enter a cell re-selection procedure, to perform cell search again and select a camped cell or a serving cell.

### (2) Neighboring cell measurement.

The neighboring cell measurement means that the terminal device measures quality of a synchronization signal of a (neighboring) cell other than a serving cell or a camped cell. The neighboring cell measurement includes intra-frequency neighboring cell measurement and inter-frequency neighboring cell measurement. The intra-frequency neighboring cell measurement means that synchronization signals and bandwidths of the serving cell and the cell other than the serving cell are on a same frequency, while the inter-frequency neighboring cell measurement means that the synchronization signals and the bandwidths of the serving cell and the cell other than the serving cell are on different frequencies. If the quality of the synchronization signal of the neighboring cell obtained by the terminal device through measurement satisfies some conditions (criteria), where for example, a difference between signal quality of the neighboring cell and signal quality of the serving cell is greater than a threshold and duration exceeds a preset time value, the terminal device starts a cell switching procedure, to switch the serving cell to the neighboring cell.

An existing NR system defines some metrics used for signal measurement of the serving cell, among which most commonly used metrics include:
(1) synchronization signal reference signal received power (synchronization signal reference signal received power, SS-RSRP), which is defined as average power on all REs carrying an SSS, that is, a sum of power of all the REs is divided by a quantity of REs;
(2) received signal strength indicator (received signal strength indicator, RSSI), which is defined as average power received by a terminal device in a measurement bandwidth on each symbol, where the measurement bandwidth is generally greater than or equal to a bandwidth of the SSS; and
(3) synchronization signal reference signal received quality (synchronization signal reference signal received quality, SS-RSRQ), which is defined as $\frac{N ∗ SS - RSRP}{RSSI}$, where N is a bandwidth of an SSS.

After obtaining the SS-RSRP and the SS-RSRQ, the terminal device may select, based on a criterion S, whether to camp on or access the cell. The criterion S is: When Srxlev>0 and Squal>0, the terminal device camps on or accesses the cell. Srxlev and Squal are respectively defined as follows: $Srxlev = {Q}_{rxlevmeas} - \left({Q}_{rxlevmin}+{Q}_{rxlevminoffset}\right) - {P}_{compensation} - {Qoffset}_{temp}$ $Squal = {Q}_{qualmeas} - \left({Q}_{qualmin}+{Q}_{qualminoffset}\right) - {Qoffset}_{temp}$

Qᵣₓₗₑᵥₘₑₐₛ is the SS-RSRP, and Q_{qualmeas} is the SS-RSRQ. Qᵣₓₗₑᵥₘᵢₙ, Q_{rxlevminoffset}, P_{compensation}, Qoffsetₜₑₘₚ, Q_{qualmin}, and Q_{qualminoffset} are parameters configured by a network side by using a system message or agreed on in advance. It may be understood that thresholds of the SS-RSRP and the SS-RSRQ are defined by using the foregoing parameters. Once both the SS-RSRP and the SS-RSRQ satisfy the foregoing thresholds, that is, Srxlev>0 and Squal>0, the terminal device may camp on or access the cell.

To implement flexible switching between the low-power receiver and the main receiver (that is, switching of the terminal device between an ultra-low-power mode and a normal-power mode), the low-power receiver needs to support at least the serving cell measurement. To be specific, the terminal device needs to receive a low-power synchronization signal or another reference signal sent in the serving cell, and evaluate signal quality. If the signal quality satisfies a predetermined criterion, where for example, the signal quality is less than a threshold T1 and duration is greater than T2, the terminal device needs to turn on or wake up the main receiver again, and switches from a low-power state or an ultra-low-power state to an operating state of the main receiver.

An existing definition of the SS-RSRP in NR is not suitable for the low-power receiver. This is because the existing SS-RSRP is defined as the average power on all the REs carrying the SSS, which includes a concept of frequency domain REs. According to the definition, when measuring and calculating the SS-RSRP, the terminal device needs to perform Fourier transform on the received signal into frequency domain for processing. However, to implement low power consumption, the low-power receiver usually does not include a fast Fourier transform (fast Fourier transform, FFT) module, and cannot perform signal processing at an RE granularity in frequency domain. The terminal device can only receive and measure the low-power synchronization signal reference signal received power (low-power SS-RSRP, LP-SS-RSRP) in time domain. Therefore, the received power applicable to the low-power receiver needs to be redefined. In embodiments of this application, when the low-power receiver performs signal measurement, if a measured signal is a signal similar to an LP-SS measured by the main receiver, received power of the measured signal may be denoted as LP-SS-RSRP. It is clear that in this application, the low-power receiver can not only measure the received power of the LP-SS, but can also measure received power of another signal, for example, measure an SSS or a channel state information reference signal (channel state information-reference signal, CSI-RS) in NR.

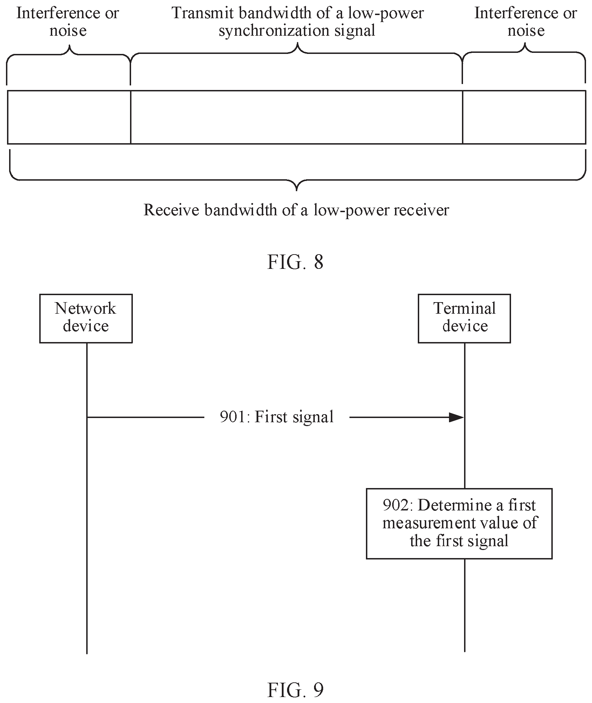

In addition, when the terminal device performs measurement in time domain, a receive bandwidth (which generally corresponds to a bandwidth of a last-stage filter before digital baseband signal processing) of the low-power receiver of the terminal device usually does not match a transmit bandwidth of the low-power synchronization signal. The receive bandwidth of the low-power receiver is also referred to as a receive bandwidth of the terminal device in the low-power state. For example, in a design, the transmit bandwidth of the low-power synchronization signal is 4.32 megahertz (MHz), while a bandwidth granularity of an analog domain low-pass filter or band-pass filter integrated in a radio frequency integrated circuit (radio frequency integrated circuit, RFIC) of the terminal device is usually only 1 MHz. Therefore, the terminal device may only be capable of using a 5 MHz filter at minimum to receive the low-power synchronization signal. FIG. 8 is an example diagram of a relationship between a transmit bandwidth of a low-power synchronization signal and a receive bandwidth of a low-power receiver. It can be learned that the receive bandwidth of the low-power receiver is greater than the transmit bandwidth of the low-power synchronization signal, and a large quantity of interference or noise signals may be received and measured at two ends of an actually received signal, reducing accuracy of LP-SS-RSRP.

To resolve the foregoing problem, embodiments of this application provide a corresponding solution.

FIG. 9 is a schematic flowchart of a communication method according to an embodiment of this application. The method is performed by a network device or a module (for example, a chip) in the network device, and a terminal device or a module (for example, a chip) in the terminal device. For ease of description, the following uses an example in which the method is performed by the network device and the terminal device for description. The method includes the following steps.

Step 901: The network device sends a first signal to the terminal device. Correspondingly, the terminal device receives the first signal in a low-power state.

That the terminal device receives the first signal in the low-power state means that the terminal device turns on a low-power receiver and receives the first signal by using the low-power receiver.

The first signal may be a low-power synchronization signal (LP-SS), a reference signal, or the like. The reference signal may be, for example, a secondary synchronization signal (SSS), a demodulation reference signal (demodulation reference signal, DMRS), or a CSI-RS. A type of the first signal is not limited in this application.

Step 902: The terminal device determines a first measurement value of the first signal.

The measurement value herein may also be referred to as a measurement metric, for example, may be reference signal received power (reference signal received power, RSRP).

The first measurement value is average received power of the first signal in a first bandwidth in first time, and the first bandwidth is a receive bandwidth of the low-power receiver or a transmit bandwidth of the first signal. The receive bandwidth of the low-power receiver is also referred to as a receive bandwidth of the terminal device in the low-power state.

In the foregoing solution, a measurement metric applicable to the low-power receiver is defined, so that a terminal device having no frequency domain processing capability or a low frequency domain processing capability can accurately determine the measurement value.

Optionally, after determining the first measurement value, the terminal device may execute a radio link operation based on the first measurement value. The radio link operation includes determining whether to turn on or wake up a main receiver, determining whether to perform cell switching, or the like.

For ease of understanding and description, an example in which the measurement value is the RSRP is subsequently used for description in this application.

A definition of RSRP in the low-power state may be a criterion agreed on between the network device and the terminal device, and the terminal device measures and calculates the RSRP based on the criterion. When measured first RSRP of the first signal satisfies a specific criterion, the terminal device performs a corresponding operation. For example, when the first RSRP is less than a preset threshold T1 and duration less than T1 reaches a time threshold T2 (or when a quantity of measurements less than T1 reaches a threshold T3), the terminal device turns on or wakes up the main receiver again, and operates by using the main receiver.

The following describes a plurality of specific implementation methods of the first RSRP.

Implementation method 1: The first signal is sent using OFDM modulation, and the first time is an OFDM symbol occupied by the first signal. Therefore, the first measurement value (that is, the first RSRP) is average received power of the first signal in the first bandwidth on the OFDM symbol occupied by the first signal.

For example, the first RSRP is equal to a ratio of received power of the first signal in the first bandwidth on the OFDM symbol occupied by the first signal to a quantity of OFDM symbols that are occupied by the first signal.

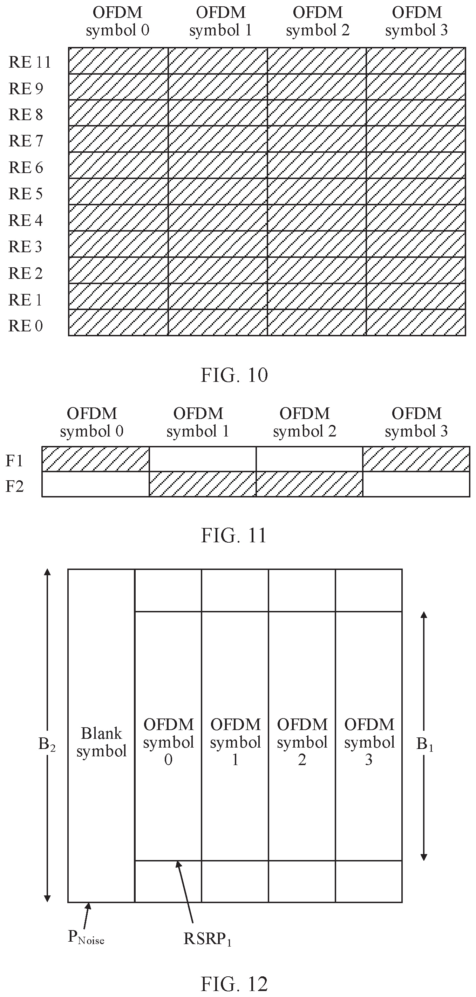

If the first signal is sent using OFDM modulation, the first signal fully occupies one or more OFDM symbols in time domain. As shown in an example in FIG. 10, the first signal occupies four consecutive OFDM symbols in time domain. The terminal device calculates received power of the four OFDM symbols in the first bandwidth (which is 12 consecutive REs in the figure), and calculates an average value of the received power relative to a quantity of OFDM symbols that are occupied by the first signal, to obtain first RSRP. That is, the first RSRP is equal to received power of the first signal on the 12 REs on the four OFDM symbols occupied by the first signal, divided by 4.

In this embodiment of this application, the first RSRP obtained through calculation by using Implementation method 1 is referred to as P0.

Implementation method 2: The first signal is sent using OOK modulation, each OOK modulation symbol occupies one OFDM symbol, and the first time is an OOK ON modulation symbol occupied by the first signal or an OFDM symbol occupied by the first signal. Therefore, the first measurement value (that is, the first RSRP) is average received power of the first signal in the first bandwidth on the OOK ON modulation symbol occupied by the first signal; or the first measurement value (that is, the first RSRP) is average received power of the first signal in the first bandwidth on the OFDM symbol occupied by the first signal.

For example, the first RSRP is equal to a ratio of received power of the first signal in the first bandwidth on the OOK ON modulation symbol occupied by the first signal to a quantity of OOK ON modulation symbols that are occupied by the first signal; or the first RSRP is equal to a ratio of received power of the first signal in the first bandwidth on the OOK ON modulation symbol occupied by the first signal to a quantity of OFDM symbols that are occupied by the first signal.

The first signal is sent using OOK modulation, and each OOK modulation symbol occupies one OFDM symbol, which may also be referred to as: The first signal is sent using 1-bit OOK modulation. The OOK modulation symbol may be an OOK ON modulation symbol or an OOK OFF modulation symbol.

In an implementation method, if the first signal is sent using the 1-bit OOK modulation, the first signal occupies N OFDM symbols in time domain, where half of the symbols are OOK ON, and the other half of the symbols are OOK OFF. FIG. 6 is used as an example. The first signal occupies four OFDM symbols in time domain, where two OFDM symbols are OOK ON modulation symbols, and the other two OFDM symbols are OOK OFF modulation symbols. The terminal device calculates received power of the two OOK ON modulation symbols in the first bandwidth (which is 12 consecutive REs in the figure), and calculates an average value of the received power relative to a quantity of OOK ON modulation symbols that are occupied by the first signal, to obtain first RSRP. That is, the first RSRP is equal to received power of the first signal in the first bandwidth on the OOK ON modulation symbols occupied by the first signal, divided by 2. In this embodiment of this application, the first RSRP obtained through calculation by using the implementation method is referred to as P1.

In another implementation method, if the first signal is sent using the 1-bit OOK modulation, the first signal occupies N OFDM symbols in time domain, where half of the symbols are OOK ON, and the other half of the symbols are OOK OFF. FIG. 6 is used as an example. The first signal occupies four OFDM symbols in time domain, where two OFDM symbols are OOK ON modulation symbols, and the other two OFDM symbols are OOK OFF modulation symbols. The terminal device calculates received power of the two OOK ON modulation symbols in the first bandwidth (which is 12 consecutive REs in the figure), and calculates an average value of the received power relative to a quantity of OFDM symbols that are occupied by the first signal, to obtain first RSRP. That is, the first RSRP is equal to received power of the first signal in the first bandwidth on the OOK ON modulation symbols occupied by the first signal, divided by 4. In this embodiment of this application, the first RSRP obtained through calculation by using the implementation method is referred to as P2. It is clear that P2=1/2×P1.

Implementation method 3: The first signal is sent using OOK modulation, each OOK modulation symbol occupies a segment on one OFDM symbol, and the first time is an OFDM symbol occupied by the first signal, an OOK ON segment occupied by the first signal, or an OOK segment occupied by the first signal. Therefore, the first measurement value (that is, the first RSRP) is average received power of the first signal in the first bandwidth on the OFDM symbol occupied by the first signal; the first measurement value (that is, the first RSRP) is average received power of the first signal in the first bandwidth in the OOK ON segment occupied by the first signal; or the first measurement value (that is, the first RSRP) is average received power of the first signal in the first bandwidth in the OOK segment occupied by the first signal.

For example, the first RSRP is equal to a ratio of received power of the first signal in the first bandwidth in the OOK ON segment occupied by the first signal to a quantity of OFDM symbols that are occupied by the first signal; the first RSRP is equal to a ratio of received power of the first signal in the first bandwidth in the OOK ON segment occupied by the first signal to a quantity of segments that are on the OFDM symbols and that are occupied by the first signal; or the first RSRP is equal to a ratio of received power of the first signal in the first bandwidth in the OOK ON segment occupied by the first signal to a quantity of OOK ON segments that are on the OFDM symbols and that are occupied by the first signal.

The first signal is sent using OOK modulation, each OOK modulation symbol occupies a first segment on one OFDM symbol, and each OFDM symbol includes 2×M segments. In this case, it may also be referred to as: The first signal is sent using M-bit OOK modulation. The OOK modulation symbol may be an OOK ON modulation symbol or an OOK OFF modulation symbol.

In an implementation method, if the first signal is sent using the M-bit OOK modulation, where M is an integer greater than 1, the first signal occupies N OFDM symbols in time domain, where on each OFDM symbol, half of the segments are OOK ON and have signal energy, and the other half of the segments are OOK OFF and have no signal energy. FIG. 7 is used as an example. M=2. The first signal occupies two OFDM symbols in time domain, where on each OFDM symbol, two segments are OOK ON, and the other two segments are OOK OFF. The terminal device calculates received power of the four OOK ON segments in the first bandwidth (which is 12 consecutive REs in the figure), and calculates an average value of the received power relative to a quantity of OFDM symbols that are occupied by the first signal, to obtain first RSRP. That is, the first RSRP is equal to received power of the first signal in the first bandwidth in the OOK ON segments occupied by the first signal, divided by 2. In this embodiment of this application, the first RSRP obtained through calculation by using the implementation method is referred to as P3.

In another implementation method, if the first signal is sent using the M-bit OOK modulation, where M is an integer greater than 1, the first signal occupies N OFDM symbols in time domain, where on each OFDM symbol, half of the segments are OOK ON and have signal energy, and the other half of the segments are OOK OFF and have no signal energy. FIG. 7 is used as an example. M=2. The first signal occupies two OFDM symbols in time domain, where on each OFDM symbol, two segments are OOK ON, and the other two segments are OOK OFF. The terminal device calculates received power of the four OOK ON segments in the first bandwidth (which is 12 consecutive REs in the figure), and calculates an average value of the received power relative to a quantity of segments that are on the OFDM symbols and that are occupied by the first signal, to obtain first RSRP. That is, the first RSRP is equal to received power of the first signal in the first bandwidth in the OOK ON segments occupied by the first signal, divided by 8. In this embodiment of this application, the first RSRP obtained through calculation by using the implementation method is referred to as P4. It is clear that P4=P3/(2×M).

In another implementation method, if the first signal is sent using the M-bit OOK modulation, where M is an integer greater than 1, the first signal occupies N OFDM symbols in time domain, where on each OFDM symbol, half of the segments are OOK ON and have signal energy, and the other half of the segments are OOK OFF and have no signal energy. FIG. 7 is used as an example. M=2. The first signal occupies two OFDM symbols in time domain, where on each OFDM symbol, two segments are OOK ON, and the other two segments are OOK OFF. The terminal device calculates received power of the four OOK ON segments in the first bandwidth (which is 12 consecutive REs in the figure), and calculates an average value of the received power relative to a quantity of OOK ON segments that are on the OFDM symbols and that are occupied by the first signal, to obtain first RSRP. That is, the first RSRP is equal to received power of the first signal in the first bandwidth in the OOK ON segments occupied by the first signal, divided by 4. In this embodiment of this application, the first RSRP obtained through calculation by using the implementation method is referred to as P5. It is clear that P5=P3/M.

In some cases, the network device sends the first signal using M-bit OOK, but expects the calculated RSRP to be defined based on reference K-bit OOK (K ≠ M). For example, the network device sends the first signal using 2-bit OOK modulation, but expects the terminal device to actually calculate the RSRP in a form of 1-bit OOK. In this case, RSRP of 2-bit OOK needs to be converted into RSRP of the 1-bit OOK. For example, the 2-bit OOK is defined using P5, which actually calculates energy of each segment in the first bandwidth, while reference RSRP is defined using P1. It is learned from a definition of P1 that P1 is equivalent to that segments occupy all energy sent on the entire OFDM symbol. Therefore, a conversion formula may be P1 = 2*M* * *P*5, which is equivalent to that all 2M segments on the OFDM symbol need to be sent, so that the received power of P1 can be obtained. Generally, for an M-bit OOK signal, a definition of RSRP of the M-bit OOK signal may have the foregoing three possibilities: P3, P4, and P5. For a K-bit OOK (K ≠ M) signal, a corresponding definition of RSRP of the K-bit OOK (K ≠ M) signal is denoted as P3K, P4K, and P5K, and a conversion relationship shown in Table 2 may be obtained.

**Table 2**

| Measurement result definition (M-bit OOK) | Conversion reference definition (K-bit OOK) | Conversion rule |
|---|---|---|
| P3 | P3K | $P 3 K = P 3 \times \frac{M}{K}$ |
| P4 | P4K | $P 4 K = P 4 \times \frac{M}{K}$ |
| P5 | P5K | $P 5 K = P 5 \times \frac{M}{K}$ |

Implementation method 4: The first signal is sent using frequency-shift keying (frequency-shift keying, FSK) modulation, and the first time is an OFDM symbol occupied by the first signal or a frequency branch on the OFDM symbol occupied by the first signal. Therefore, the first measurement value (that is, the first RSRP) is average received power of the first signal in the first bandwidth on the OFDM symbol occupied by the first signal; or the first measurement value (that is, the first RSRP) is average received power of the first signal in the first bandwidth on the frequency branch on the OFDM symbol occupied by the first signal.

For example, the first RSRP is equal to a ratio of received power of the first signal in the first bandwidth on the OFDM symbol occupied by the first signal to a quantity of OFDM symbols that are occupied by the first signal; or the first RSRP is equal to a ratio of received power of the first signal in the first bandwidth on the OFDM symbol occupied by the first signal to a quantity of frequency branches on the OFDM symbol occupied by the first signal.

The frequency branches may be understood as a plurality of frequency domain bandwidth ranges. For example, each frequency domain branch includes X RBs, different frequency branches do not overlap, and the different frequency branches may be consecutive or not consecutive.

FIG. 11 is used as an example. The first signal is sent using two frequencies F1 and F2 (which are denoted as 2-FSK), and the first signal occupies four OFDM symbols in time domain. When the first signal is sent on F1 but not sent on F2, it indicates information 0. When the first signal is not sent on F1 but sent on F2, it indicates information 1. In this way, it can be learned that information sent on the four OFDM symbols in the figure is 0110.

In an implementation method, the terminal device calculates received power in all of the first bandwidth (including F1 and F2) on the OFDM symbols (which are four OFDM symbols in FIG. 11) occupied by the first signal, and calculates an average value of the received power relative to a quantity (which is 4 in the figure) of OFDM symbols that are occupied by the first signal, to obtain first RSRP. That is, the first RSRP is equal to received power of the first signal in the first bandwidth on the OFDM symbols occupied by the first signal, divided by 4. In this embodiment of this application, the first RSRP obtained through calculation by using the implementation method is referred to as P6.

In another implementation method, the terminal device calculates received power in all of the first bandwidth (including F1 and F2) on the OFDM symbols (which are four OFDM symbols in FIG. 11) occupied by the first signal, and calculates an average value of the received power relative to a quantity (which is 4×2=8 in the figure) of frequency branches on the OFDM symbols occupied by the first signal, to obtain first RSRP. That is, the first RSRP is equal to received power of the first signal in the first bandwidth on the OFDM symbols occupied by the first signal, divided by 8. In this embodiment of this application, the first RSRP obtained through calculation by using the implementation method is referred to as P7. It is clear that P7=1/2×P6.

Further, 2-FSK may be extended to M-FSK (M frequency branches, where M is an integer greater than or equal to 2), and a similar definition can be obtained.

The foregoing provides four different implementation methods for determining the first RSRP. In actual use, one or more of the methods may be selected based on an actual need, to calculate the RSRP.

In an implementation method, after the first RSRP is obtained by using the foregoing method, the terminal device corrects the first RSRP to obtain more accurate second RSRP, thereby improving accuracy of the RSRP. The following describes each case.

Case 1: The terminal device determines the second RSRP based on the first RSRP, the receive bandwidth of the low-power receiver, the transmit bandwidth of the first signal, and noise interference power. The noise interference power is average received power of noise and/or interference obtained through measurement in the receive bandwidth of the low-power receiver, the low-power receiver may measure the noise interference power in second time, and the second time is not used for sending the first signal. Optionally, the second time may include one or more zero-power blank symbols (zero symbols), or the second time includes one or more OFDM symbols or segments on the one or more OFDM symbols for sending no information.

It may be understood that the first RSRP is initial RSRP determined by step 902, and the second RSRP is accurate RSRP obtained by reducing the interference and/or the noise.

For example, when the receive bandwidth of the low-power receiver is greater than the transmit bandwidth of the first signal, ${RSRP}_{2} = {RSRP}_{1} - {P}_{Noise} ∗ \frac{{B}_{2} - {B}_{1}}{{B}_{2}}$

*RSRP*₂ is the second RSRP, and *RSRP*₁ is the first RSRP. *B*₂ is the receive bandwidth of the low-power receiver. In a specific implementation, a passband bandwidth or a noise equivalent bandwidth of a last-stage filter before digital baseband processing of the terminal device may be used as the receive bandwidth of the low-power receiver. *B*₁ is the transmit bandwidth of the first signal, a preset reference bandwidth, or a bandwidth negotiated by the network device and the terminal device (where the negotiated bandwidth may be configured by the network device for the terminal device by using signaling). *P_{Noise}* is the noise interference power.

FIG. 12 is an example diagram of reducing impact of noise and/or interference on a measurement value. With reference to FIG. 12, it can be learned that a meaning of the foregoing formula (1) is: Received power obtained by the terminal device through measurement in the receive bandwidth of the low-power receiver includes noise and/or interference power of a (*B*₂ - *B*₁) bandwidth part. To remove the power, the terminal device further needs to measure noise and/or interference power, obtained through measurement in the receive bandwidth of the low-power receiver, in the second time (which is, for example, on one or more blank symbols). A bandwidth of the noise and/or the interference is also *B*₂. Then, the noise and/or interference power is scaled to a bandwidth (*B*₂ - *B*₁), to approximate noise and/or interference power on two sides of the first signal, that is, ${P}_{Noise} ∗ \frac{{B}_{2} - {B}_{1}}{{B}_{2}}$. Then, the part of power is subtracted from the measurement value *RSRP*₁, which is corrected *RSRP*₂*.*

It should be noted that the second time used for measuring the average received power of the noise and/or the interference should match the first time for measuring the first RSRP. Specifically, if the first time includes one or more OOK segments, the second time includes one or more OOK segments; if the first time includes one or more OOK ON segments, the second time includes one or more OOK ON segments; if the first time includes one or more OFDM symbols, the second time includes one or more OFDM symbols; or if the first time includes frequency branches on one or more OFDM symbols, the second time includes frequency branches on one or more OFDM symbols.

For example, the second time used for measuring the noise and interference power includes one blank symbol. In this case, the blank symbol may be defined in any one of the following manner (1), (2), or (3).
(1) For the first signal using Manchester coding, the noise and/or interference power may be directly measured based on one or more OOK OFF modulation symbols or OOK segments, that is, the blank symbol is the OOK OFF modulation symbol.

It should be noted that the terminal device knows a sequence form of the first signal in advance, and therefore knows an actual position of the OOK OFF modulation symbol, so that the noise and/or interference power can be measured on the OOK OFF modulation symbol or in the OOK segment.

Refer to FIG. 6. The blank symbol may be an OFDM symbol 1 or an OFDM symbol 2.

Refer to FIG. 7. The blank symbol may be a segment 1 or a segment 2 on the OFDM symbol 0, or may be a segment 0 or a segment 3 on the OFDM symbol 1.

(2) For the first signal using the FSK modulation, the noise and/or interference power may be directly measured based on a known frequency on which no signal is sent.

It should be noted that the terminal device learns of a sequence form of the first signal in advance, and therefore learns of an actual position of the frequency branch that is occupied by the first signal, so that the noise and/or interference power can be measured on a frequency branch on which no signal is sent.

Refer to FIG. 6. The blank symbol may be an OFDM symbol 0 corresponding to the frequency F2, an OFDM symbol 1 corresponding to the frequency F1, an OFDM symbol 2 corresponding to the frequency F1, or an OFDM symbol 3 corresponding to the frequency F2. That is, the noise and/or interference power is measured by using a time-frequency resource on a blank pattern in FIG. 6.

(3) The network device predefines a blank symbol or a segment on the OFDM symbol used for noise and/or interference measurement. For example, for the first signal using the OFDM modulation, a network side may configure a noise and/or interference measurement symbol to be located near the first signal in terms of time, to ensure that the blank symbol and a transmit symbol of the first signal have approximate noise and/or interference.

For example, it is assumed that the first signal occupies four symbols: S1, S2, S3, and S4 respectively. In this case, the blank symbol used for noise and/or interference measurement may be the symbol S0 preceding the first signal, or a symbol S5 succeeding the first signal. Alternatively, the blank symbol used for noise and/or interference measurement may be located inside the OFDM symbol occupied by the first signal, where for example, symbols are sequentially as follows in terms of time: S1, S2, the blank symbol, S3, and S4. That is, the blank symbol is located between S2 and S3.

In another example, a method for calculating the second RSRP is as follows: ${RSRP}_{2} = {RSRP}_{1} - {P}_{Noise}$

*RSRP*₂ is the second RSRP, *RSRP*₁ is the first RSRP, and *P_{Noise}* is the noise interference power.

A meaning of the foregoing formula (2) is: Received power of the first signal obtained by the terminal device through measurement in the receive bandwidth of the low-power receiver includes noise and/or interference power. To reduce or remove the power, the terminal device further needs to measure noise and/or interference power, obtained through measurement in the receive bandwidth of the low-power receiver, in the second time (which is, for example, on one or more blank symbols). A receive bandwidth of the noise and/or the interference is the same as a receive bandwidth of the first signal. Then, the part of power is subtracted from the measurement value *RSRP*₁, which is corrected *RSRP*₂.

In an implementation method, after determining the second RSRP, the terminal device may execute a radio link operation based on the second RSRP. The radio link operation includes determining whether to turn on or wake up the main receiver, determining whether to perform cell switching, or the like.

Case 2: The terminal device determines third RSRP based on the first RSRP, the receive bandwidth of the low-power receiver, and the transmit bandwidth of the first signal.

It may be understood that the first RSRP is initial RSRP determined by step 902, and the third RSRP is determined to be more accurate RSRP.

For example, when the receive bandwidth of the low-power receiver is less than the transmit bandwidth of the first signal, ${RSRP}_{3} = {RSRP}_{1} ∗ \frac{{B}_{1}}{{B}_{2}}$

*RSRP*₃ is the third RSRP, and *RSRP*₁ is the first RSRP. *B*₂ is the receive bandwidth of the low-power receiver. In a specific implementation, a passband bandwidth or a noise equivalent bandwidth of a last-stage filter before digital baseband processing of the terminal device may be used as the receive bandwidth of the low-power receiver. *B*₁ is the transmit bandwidth of the first signal, a preset reference bandwidth, or a bandwidth negotiated by the network device and the terminal device.

In an implementation method, after determining the third RSRP, the terminal device may execute a radio link operation based on the third RSRP. The radio link operation includes determining whether to turn on or wake up the main receiver, determining whether to perform cell switching, or the like.

In an implementation method, after determining the RSRP (for example, the first RSRP, the second RSRP, or the third RSRP) of the first signal by using the foregoing methods, the low-power receiver of the terminal device may further determine RSRQ, where $RSRQ = \frac{RSRP}{RSSI}$. RSSI may be defined as received signal strength of the low-power receiver based on a specific bandwidth in specific time. The time and the bandwidth are pre-determined by the network device and the terminal device, or indicated to the terminal device by the network device by using signaling (physical layer signaling, higher layer signaling, or the like).

In this embodiment of this application, low-power receivers of some terminal devices may have a frequency domain signal processing capability, while low-power receivers of some other terminal devices have no frequency domain processing capability. Therefore, the network side may define two sets of RSRP, and separately define different switching parameters between the low-power receiver and the main receiver based on a capability of the terminal device.

For a low-power receiver having no frequency domain processing capability (that is, a low-power receiver without an FFT module in a baseband) or a low-power receiver whose frequency domain processing capability is less than a first threshold, RSRP and RSRQ of the low-power receiver are defined in the foregoing manner in this embodiment of this application. In other words, the RSRP may be the first RSRP, the second RSRP, or the third RSRP. In addition, the network device configures or agrees on, for this type of terminal device, a corresponding threshold T1, T2, T3, or the like for triggering execution of RLM, or determines, with reference to parameters in conventional technologies such as Qᵣₓₗₑᵥₘᵢₙ, Q_{rxlevminoffset}, P_{compensation}, Q_{offsettemp}, Q_{qualmin}, and Q_{qualminoffset}, the threshold T1, T2, T3, or the like for triggering execution of RLM. Based on this scenario, step 902 may be specifically: When the low-power receiver of the terminal device has no frequency domain processing capability, the terminal device determines the first RSRP of the first signal.

For a low-power receiver having the frequency domain processing capability (that is, a low-power receiver having the FFT module) or a low-power receiver whose frequency domain processing capability is greater than or equal to the first threshold, the RSRP and the RSRQ of the low-power receiver are defined in an existing manner in NR. In addition, the network device configures or agrees on, for this type of terminal device, a corresponding threshold T1, T2, T3, or the like for triggering execution of RLM, or determines, with reference to parameters in conventional technologies such as Qᵣₓₗₑᵥₘᵢₙ, Q_{rxlevminoffset}, P_{compensation}, Qoffsetₜₑₘₚ, Q_{qualmin}, and Q_{qualminoffset}, the threshold T1, T2, T3, or the like for triggering execution of RLM.

Alternatively, in another implementation method, regardless of whether the low-power receiver has the frequency domain processing capability, both the RSRP and the RSRQ of the low-power receiver are defined in the foregoing manner in this embodiment of this application. In other words, the RSRP may be the first RSRP, the second RSRP, or the third RSRP. In addition, the network device configures or agrees on, for this type of terminal device, the corresponding threshold T1, T2, T3, or the like for triggering execution of RLM, or determines, with reference to the parameters in the conventional technologies such as Qᵣₓₗₑᵥₘᵢₙ, Q_{rxlevminoffset}, P_{compensation}, Qoffsetₜₑₘₚ, Q_{qualmin}, and Q_{qualminoffset,} the threshold T1, T2, T3, or the like for triggering execution of RLM.

In an implementation method, the terminal device may send capability information, where the capability information includes at least one of first information, second information, or the receive bandwidth of the low-power receiver. The first information indicates the frequency domain processing capability of the low-power receiver of the terminal device, and the second information indicates an estimation capability of the low-power receiver for the noise and/or the interference. The network device receives the capability information, and determines a configuration parameter of the terminal device based on the capability information. The configuration parameter includes a measurement threshold, and the measurement threshold is used for determining whether to execute the radio link operation. The measurement threshold includes, for example, the threshold T1, T2, or T3 used for triggering execution of the radio link operation, or Qᵣₓₗₑᵥₘᵢₙ, Q_{rxlevminoffset}, P_{compensation}, Qoffsetₜₑₘₚ, Q_{qualmin}, and Q_{qualminoffset}. Optionally, the capability information reported by the terminal device may be first sent to the network device; the network device transparently transmits the capability information to a core network device; and then the core network device sends a paging message to the network device, where the paging message includes the capability information of the terminal device. Correspondingly, that the network device sends the configuration parameter to the terminal device may be specifically: The network device sends dedicated signaling to the terminal device, where the dedicated signaling includes the measurement threshold. The dedicated signaling may be radio resource management (radio resource control, RRC) signaling, physical layer signaling, or medium access control (medium access control, MAC) layer signaling.

In another implementation method, if the terminal device does not report the capability information, where for example, the capability information does not need to be reported or reporting of the capability information is not defined in a protocol, the network device may send the configuration parameter to the terminal device using a system message or another type of broadcast message. The configuration parameter includes a plurality of measurement thresholds. The terminal device may select an appropriate measurement threshold from the plurality of measurement thresholds based on the capability of the terminal device.

It may be understood that, to implement functions in the foregoing embodiments, the terminal device or the network device includes corresponding hardware structures and/or software modules for performing the functions. A person skilled in the art should be easily aware that, in this application, units and method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

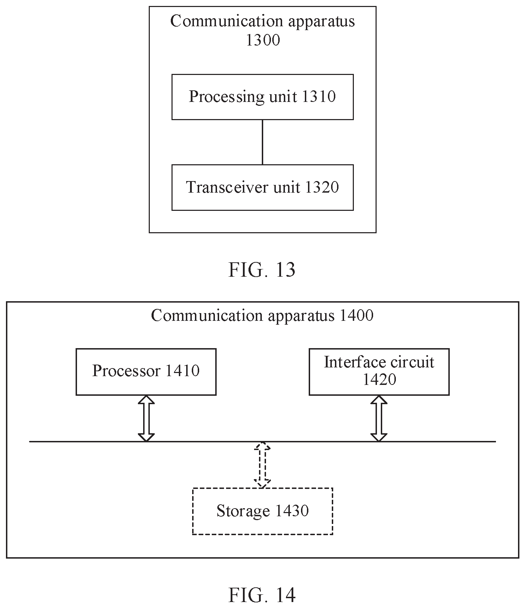

FIG. 13 and FIG. 14 are diagrams of structures of possible communication apparatuses according to embodiments of this application. The communication apparatuses may be configured to implement a function of the terminal device or the network device in the foregoing method embodiments. Therefore, beneficial effects of the foregoing method embodiments can also be implemented. In embodiments of this application, the communication apparatus may be a terminal device, may be a network device, or may be a module (for example, a chip) used in the terminal device or the network device.

A communication apparatus 1300 shown in FIG. 13 includes a processing unit 1310 and a transceiver unit 1320. The communication apparatus 1300 is configured to implement a function of the terminal device or the network device in the foregoing method embodiments.

When the communication apparatus 1300 is configured to implement the function of the terminal device in the foregoing method embodiments, the transceiver unit 1320 is configured to receive a first signal from the network device in a low-power state; and the processing unit 1310 is configured to determine a first measurement value of the first signal, where the first measurement value is average received power of the first signal in a first bandwidth in first time, and the first bandwidth is a receive bandwidth of the terminal device in the low-power state or a transmit bandwidth of the first signal.

In a possible implementation method, the first signal is sent using OFDM modulation, and the first time is an OFDM symbol occupied by the first signal.

In a possible implementation method, the first signal is sent using OOK modulation, each OOK modulation symbol occupies one OFDM symbol, and the first time is an OOK ON modulation symbol occupied by the first signal or an OFDM symbol occupied by the first signal. In a possible implementation method, the first signal is sent using OOK modulation, each OOK modulation symbol occupies a segment on one OFDM symbol, and the first time is an OFDM symbol occupied by the first signal, an OOK ON segment occupied by the first signal, or an OOK segment occupied by the first signal.

In a possible implementation method, the first signal is sent using FSK modulation, and the first time is an OFDM symbol occupied by the first signal or a frequency branch on the OFDM symbol occupied by the first signal.

In a possible implementation method, the processing unit 1310 is further configured to determine a second measurement value based on the first measurement value, the receive bandwidth of the terminal device in the low-power state, the transmit bandwidth of the first signal, and noise interference power, where the noise interference power is average received power of noise and/or interference, obtained through measurement in the receive bandwidth of the terminal device in the low-power state, in second time occupied by the noise and/or the interference, and the second time is not used for sending the first signal.

In a possible implementation method, ${RSRP}_{2} = {RSRP}_{1} - {P}_{Noise} ∗ \frac{{B}_{2} - {B}_{1}}{{B}_{2}}$, where *RSRP*₂ is the second measurement value, *RSRP*₁ is the first measurement value, *B*₂ is the receive bandwidth of the terminal device in the low-power state, *B*₁ is the transmit bandwidth of the first signal, and *P_{Noise}* is the noise interference power.

In a possible implementation method, the processing unit 1310 is further configured to determine a third measurement value based on the first measurement value, the receive bandwidth of the terminal device in the low-power state, and the transmit bandwidth of the first signal.

In a possible implementation method, ${RSRP}_{3} = {RSRP}_{1} ∗ \frac{{B}_{1}}{{B}_{2}}$, where *RSRP*₃ is the third measurement value, *RSRP*₁ is the first measurement value, *B*₂ is the receive bandwidth of the terminal device in the low-power state, and *B*₁ is the transmit bandwidth of the first signal.

In a possible implementation method, that the terminal device determines the first measurement value of the first signal includes: determining the first measurement value of the first signal when a frequency domain processing capability of a low-power receiver of the terminal device is less than a first threshold.

In a possible implementation method, the transceiver unit 1320 is further configured to: send capability information, where the capability information includes at least one of first information, second information, or the receive bandwidth of the terminal device in the low-power state, the first information indicates the frequency domain processing capability of the low-power receiver of the terminal device, and the second information indicates an estimation capability of the low-power receiver for the noise and/or the interference; and receive a measurement threshold, where the measurement threshold is determined based on the capability information; and the processing unit 1310 is further configured to determine, based on the measurement threshold, whether to execute a radio link operation.

For more detailed descriptions of the processing unit 1310 and the transceiver unit 1320, directly refer to related descriptions in the foregoing method embodiments for direct obtaining. Details are not described herein again.

A communication apparatus 1400 shown in FIG. 14 includes a processor 1410 and an interface circuit 1420. The processor 1410 and the interface circuit 1420 are coupled to each other. It may be understood that the interface circuit 1420 may be a transceiver or an input/output interface. Optionally, the communication apparatus 1400 may further include a storage 1430 configured to store instructions executed by the processor 1410, store input data required by the processor 1410 to run the instructions, or store data generated after the processor 1410 runs the instructions.

When the communication apparatus 1400 is configured to implement the foregoing method embodiments, the processor 1410 is configured to implement a function of the foregoing processing unit 1310, and the interface circuit 1420 is configured to implement a function of the foregoing transceiver unit 1320.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

The method steps in embodiments of this application may be implemented in a hardware manner, or may be implemented in a manner of executing software instructions by a processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or any other form of storage medium well known in the art. For example, a storage medium is coupled to a processor, so that the processor can read information from the storage medium and write information into the storage medium. It is clear that the storage medium may be a component of the processor. The processor and the storage medium may be located in an ASIC. In addition, the ASIC may be located in a terminal device or a network device. It is clear that the processor and the storage medium may also exist in an access network device or a terminal as discrete components.

All or a part of the foregoing embodiments may be implemented by using software, hardware, firmware, or any combination thereof. When software is used for implementing the embodiments, all or a part of the embodiments may be implemented in a form of a computer program product. The computer program product includes one or more computer programs or instructions. The computer program (computer program) is a set of instructions that indicate each step of an action of an electronic computer or another device having a message processing capability, and is usually written in a program design language and run on a target architecture. When the computer program or the instructions are loaded and executed on a computer, all or a part of procedures or functions according to embodiments of this application are executed. The computer may be a general-purpose computer, a dedicated computer, a computer network, or another programmable apparatus. The computer program or the instructions may be stored in a computer-readable storage medium, or may be transmitted from a computer-readable storage medium to another computer-readable storage medium. For example, the computer program or the instructions may be transmitted from a website, a computer, a server, or a data center to another website, computer, server, or data center in a wired or wireless manner. The computer-readable storage medium may be any usable medium that can be accessed by a computer, or a data storage device, for example, a server or a data center, integrating one or more usable media. The usable medium may be a magnetic medium, for example, a floppy disk, a hard disk, or a magnetic tape; may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise specified or if there is a logic conflict, terms and/or descriptions of different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. In text descriptions of this application, the character "/" generally indicates an "or" relationship between the associated objects. In a formula in this application, the character "/" indicates a "division" relationship between the associated objects.

It may be understood that various numbers in embodiments of this application are merely used for differentiation for ease of description, and are not used for limiting the scope of embodiments of this application. Sequence numbers of the foregoing processes do not mean an execution sequence, and the execution sequence of the processes should be determined based on functions and internal logic of the processes.

## Claims

1. A communication method, applied to a terminal device or a module in the terminal device, wherein the method comprises:
receiving a first signal from a network device in a low-power state; and
determining a first measurement value of the first signal, wherein the first measurement value is average received power of the first signal in a first bandwidth in first time, and the first bandwidth is a receive bandwidth of the terminal device in the low-power state or a transmit bandwidth of the first signal.

2. The method according to claim 1, wherein the first signal is sent using orthogonal frequency division multiplexing OFDM modulation, and the first time is an OFDM symbol occupied by the first signal.

3. The method according to claim 1, wherein the first signal is sent using on-off keying OOK modulation, each OOK modulation symbol occupies one OFDM symbol, and the first time is an OOK ON modulation symbol occupied by the first signal or an OFDM symbol occupied by the first signal.

4. The method according to claim 1, wherein the first signal is sent using OOK modulation, each OOK modulation symbol occupies a segment on one OFDM symbol, and the first time is an OFDM symbol occupied by the first signal, an OOK ON segment occupied by the first signal, or an OOK segment occupied by the first signal.

5. The method according to claim 1, wherein the first signal is sent using frequency-shift keying FSK modulation, and the first time is an OFDM symbol occupied by the first signal or a frequency branch on the OFDM symbol occupied by the first signal.

6. The method according to any one of claims 1 to 5, wherein the method further comprises:
determining a second measurement value based on the first measurement value, the receive bandwidth of the terminal device in the low-power state, the transmit bandwidth of the first signal, and noise interference power, wherein
the noise interference power is average received power of noise and/or interference, obtained through measurement in the receive bandwidth of the terminal device in the low-power state, in second time occupied by the noise and/or the interference, and the second time is not used for sending the first signal.

7. The method according to claim 6, wherein ${RSRP}_{2} = {RSRP}_{1} - {P}_{Noise} ∗ \frac{{B}_{2} - {B}_{1}}{{B}_{2}} ,$ wherein
*RSRP*₂ is the second measurement value, *RSRP*₁ is the first measurement value, *B*₂ is the receive bandwidth of the terminal device in the low-power state, *B*₁ is the transmit bandwidth of the first signal, and *P_{Noise}* is the noise interference power.

8. The method according to any one of claims 1 to 5, wherein the method further comprises:
determining a third measurement value based on the first measurement value, the receive bandwidth of the terminal device in the low-power state, and the transmit bandwidth of the first signal.

9. The method according to claim 8, wherein ${RSRP}_{3} = {RSRP}_{1} ∗ \frac{{B}_{1}}{{B}_{2}} ,$ wherein
*RSRP*₃ is the third measurement value, *RSRP*₁ is the first measurement value, *B*₂ is the receive bandwidth of the terminal device in the low-power state, and *B*₁ is the transmit bandwidth of the first signal.

10. The method according to any one of claims 1 to 9, wherein determining, by the terminal device, the first measurement value of the first signal comprises:
determining the first measurement value of the first signal when a frequency domain processing capability of a low-power receiver of the terminal device is less than a first threshold.

11. The method according to any one of claims 1 to 10, wherein the method further comprises:
sending capability information, wherein the capability information comprises at least one of first information, second information, or the receive bandwidth of the terminal device in the low-power state, the first information indicates the frequency domain processing capability of the low-power receiver of the terminal device, and the second information indicates an estimation capability of the low-power receiver for the noise and/or the interference;
receiving a measurement threshold, wherein the measurement threshold is determined based on the capability information; and
determining, based on the measurement threshold, whether to execute a radio link operation.

12. A communication apparatus, comprising a module configured to perform the method according to any one of claims 1 to 11.

13. A communication apparatus, comprising a processor and an interface circuit, wherein the processor is configured to communicate with another apparatus via the interface circuit, and perform the method according to any one of claims 1 to 11.

14. A computer program product, wherein the computer program product comprises instructions; and when the instructions are run on a processor, the processor is caused to perform the method according to any one of claims 1 to 11.

15. A computer-readable storage medium, wherein the storage medium stores a computer program or instructions; and when the computer program or the instructions are executed by a communication apparatus, the method according to any one of claims 1 to 11 is implemented.
